# EUROPÄISCHE PATENTSCHRIFT

(11) **EP 0 914 297 B1**
(45) Veröffentlichungstag und Bekanntmachung des Hinweises auf die Patenterteilung: **02.04.2003**
(21) Anmeldenummer: 98916879.4
(22) Anmeldetag: 28.02.1998
(51) Int. Cl.: C03B 23/03, C03B 23/035, C03B 35/20, C03B 35/24

(54) **VERFAHREN ZUM BIEGEN DER AUSSENSCHEIBE UND DER INNENSCHEIBE VON GEBOGENEN VERBUNDSICHERHEITSGLASSCHEIBEN SOWIE PRESSBIEGEANLAGE ZUR DURCHFÜHRUNG DES VERFAHRENS**
METHOD FOR BENDING AN OUTER AND AN INNER GLASS PANE OF BENT COMPOSITE SECURITY GLASS SHEETS, BENDING PRESS FOR THE IMPLEMENTATION OF SAID METHOD
PROCEDE POUR LE CINTRAGE DE LA VITRE EXTERIEURE ET DE LA VITRE INTERIEURE DE VITRAGES DE SECURITE FEUILLETES BOMBES, AINSI QU'INSTALLATION DE CINTRAGE PAR PRESSAGE POUR LA MISE EN OEUVRE DE CE PROCEDE

(30) Priorität: 16.04.1997 DE 19715778
(43) Veröffentlichungstag der Anmeldung: 12.05.1999
(73) Patentinhaber: Pilkington Automotive Deutschland GmbH, 58455 Witten (DE)
(72) Erfinder: FUNK, Dieter, D-58452 Witten (DE)
(74) Vertreter: Honke, Manfred, Dr.-Ing.
(86) Internationale Anmeldenummer: EP9801139
(87) Internationale Veröffentlichungsnummer: WO98046535

(56) Entgegenhaltungen:
- EP-A- 0 668 249
- DE-C- 3 913 571
- DE-C- 4 034 600
- US-A- 5 286 271

## Beschreibung

Die Erfindung betrifft ein Verfahren zum Biegen der Außenglasscheibe und der Innenglasscheibe von mit vorgegebener Krümmungsgeometrie gebogenen Verbundsicherheitsglasscheiben, in denen jeweils eine Außenglasscheibe und eine Innenglasscheibe unter Zwischenschaltung einer Verbundfolie gepaart sind, bei welchem Verfahren das Biegen in einer Preßbiegeanlage erfolgt, welche Preßbiegeanlage eine Biegestation, zumindest eine Entladestation sowie zwischen Biegestation und Entladestation jeweils einen Transportshuttle aufweist, wobei die auf Biegetemperatur erwärmten, zu biegenden Glasscheiben mit Hilfe einer Transferstraße einzeln in die Biegestation eingeführt und in dieser unter Berücksichtigung der vorgegebenen Krümmungsgeometrie der Verbundsicherheitsglasscheiben gebogen werden. Im allgemeinen werden dabei die gebogenen Außenglasscheiben mit einem Transportshuttle zur Außenglasscheiben-Entladestation verbracht, dessen Aufnahmefläche der Krümmungsgeometrie der Außenglasscheibe in der fertigen Verbundsicherheitsglasscheibe entspricht, und werden die gebogenen Innenglasscheiben mit einem Transportshuttle zur Innenglasscheiben-Entladestation verbracht, dessen Aufnahmefläche der Krümmungsgeometrie der Innenglasscheibe in der fertigen Verbundsicherheitsglasscheibe entspricht. - Die Erfindung betrifft fernerhin eine Preßbiegeanlage, die für die Durchführung des erfindungsgemäßen Verfahrens besonders geeignet ist. Die Verbundsicherheitsglasscheiben sind insbesondere für Kraftfahrzeuge bestimmt.

Verfahren zum Biegen der Außenglasscheibe und der Innenglasscheibe von mit vorgegebener Krürmmmgsgeometrie gebogenen Verbundsicherheitsglasscheiben und entsprechende Preßbiegeanlagen sind in verschiedenen Ausführungsformen bekannt. Es versteht sich, daß die gebogenen Außenglasscheiben und die gebogenen Innenglasscheiben der weiteren Verarbeitung zur fertigen Verbundsicherheitsglasscheibe zugeführt werden.

Im Rahmen der bekannten Maßnahmen, von denen die Erfindung ausgeht (EP 0 668 249, US 52 86 271), verlassen die gebogenen Außenglasscheiben sowie die gebogenen Innenglasscheiben die Biegestation mit Toleranzen in bezug auf die vorgegebene Krümmungsgeometrie der herzustellenden Verbundsicherheitsglasscheiben, die zwar den Ansprüchen genügt, jedoch in bezug auf optische Qualitätsparameter verbesserungsfähig sind. Das gilt insbesondere für die Randbereiche der für Kraftfahrzeuge bestimmten Verbundsicherheitsglasscheiben. Diese Verbesserung mit einfachen verfahrenstechnischen Maßnahmen und einfachen Mitteln in bezug auf die Anlage durchzuführen, ist das technische Problem der vorliegenden Erfindung.

Zur Lösung dieses technischen Problems lehrt die Erfindung ein Verfahren zum Biegen der Außenglasscheibe und der Innenglasscheibe von mit vorgegebener Krümmungsgeometrie gebogenen Verbundsicherheitsglasscheiben, in denen jeweils eine Außenglasscheibe und eine Innenglasscheibe unter Zwischenschaltung einer Verbundfolie gepaart sind, bei welchem Verfahren das Biegen in einer Preßbiegeanlage erfolgt,
welche Preßbiegeanlage eine Biegestation, zumindest eine Entladestation sowie zwischen Biegestation und Entladestation einen Transportshuttle aufweist,
wobei die auf Biegetemperatur erwärmten, zu biegenden Glasscheiben mit Hilfe einer Transferstraße einzeln in die Biegestation eingeführt und in dieser unter Berücksichtigung der vorgegebenen Krümmungsgeometrie der Verbundsicherheitsglasscheiben gebogen werden, mit den Merkmalen:
1.1) die Außenglasscheibe und die Innenglasscheibe werden mit einer Temperatur, die im unteren Biegetemperaturbereich liegt, in der ihnen zugeordneten Entladestation einer Optimierungsbiegung unterworfen,
1.2) zur Durchführung der Optimierungsbiegung wird die entsprechende Glasscheibe von dem Transportshuttle mit Hilfe einer Abnahmeeinrichtung abgehoben, welche Abnahmeeinrichtung zumindest im Randbereich eine Optimierungskontur aufweist, welche der vorgegebenen Krümmungsgeometrie der Außenglasscheibe bzw. der Innenglasscheibe in der fertigen Verbundsicherheitsglasscheibe entspricht,
1.3) durch Anlegen der entsprechenden Glasscheibe an die Optimierungskontur der Abnahmeeinrichtung wird die Optimierungsbiegung durchgeführt,
   wobei sich im Zuge der Optimierungsbiegung die Glasscheibe auf eine Temperatur unterhalb des Biegetemperaturbereichs abkühlt. - Im allgemeinen sind nach der Optimierungsbiegung besondere Abkühlungsmaßnahmen für die Glasscheiben nicht erforderlich, weil der natürliche Biegetemperaturverlust bei der Optimierungsbiegung für die Fixierung der Optimierungsbiegung ausreicht.

In der Ausführungsform für die Herstellung von Verbundsicherheitsglasscheiben für Kraftfahrzeuge mit kraftfahrzeugüblichen Glasqualitäten werden die Außenglasscheiben und die Innenglasscheiben zweckmäßigerweise mit einer Biegetemperatur im Bereich von 550 bis 580° C der Optimierungsbiegung unterworfen und bei einer Temperatur unter 530° C an eine Fördereinrichtung abgegeben. Im Rahmen der Merkmale 1.2) und 1.3) erfolgt das Anlegen der Glasscheiben an die Abnahmeeinrichtung vorzugsweise mit Hilfe von aerostatischen und/oder aerodynamischen Luftkräften, die von der Abnahmeeinrichtung erzeugt werden. Das Anlegen der Glasscheiben kann auch mit mechanischen Einrichtungen vorgenommen werden.

Die Erfindung geht von der Erkenntnis aus, daß in das eingangs beschriebene Verfahren einer industriellen Serienfertigung problemlos und ohne besonderen Aufwand eine optimierende Verfahrensstufe integriert werden kann. In der Außenglasscheiben-Entladestation bzw. in der Innenglasscheiben-Entladestation, kann die Optimierung praktisch ohne Störung des üblichen Verfahrensablaufes durchgeführt werden, indem die dort erfolgende Abnahme mit einer Abnahmeeinrichtung vorgenommen wird, die in der beschriebenen Weise die Durchführung der Optimierungsbiegung erlaubt. Tatsächlich ist es lediglich erforderlich, die ohnehin vorhandene Abnahmeeinrichtung wie beschrieben für die Optimierung zu adaptieren. Die thermodynamischen Parameter in bezug auf die Biegetemperatur und auch die Abkühlung können unschwer eingestellt werden. - Ähnliche Werkzeuge, wie sie für die Optimierungsbiegung im Rahmen der Erfindung eingesetzt werden, sind für andere Zwecke in der Glasindustrie bekannt (US 50 96 480, EP 0 216 701).

Das erfindungsgemäße Verfahren erlaubt eine weitere Vereinfachung des gesamten Verfahrensablaufs, und zwar dadurch, daß der Optimierungsbiegung für die einzelnen Verbundsicherheitsglasscheiben eine Außenglasscheibe und eine Innenglasscheibe zugeführt werden, die in der Biegestation mit der gleichen Vakuumflächenform gebogen worden sind, deren Formflächen zumindest bereichsweise der Krümmungsfläche der Verbundfolie in der fertigen Verbundsicherheitsglasscheibe entsprechen, vorzugsweise im Zentrumsbereich.

Das erfindungsgemäße Verfahren kann in verschiedenen Preßbiegeanlagen durchgeführt werden. Gegenstand der Erfindung ist eine Preßbiegeanlage zum Biegen der Außenglasscheibe und der Innenglasscheibe von mit vorgegebener Krümmungsgeometrie gebogenen Verbundsicherheitsglasscheiben, in denen jeweils eine Außenglasscheibe und eine Innenglasscheibe unter Zwischenschaltung einer Verbundfolie gepaart sind, welche Preßbiegeanlage eine Biegestation, zumindest eine Entladestation sowie zwischen Biegestation und Entladestation jeweils einen Transportshuttle aufweist, wobei die gebogenen Glasscheiben mit ihrem Transportshuttle zur Entladestation verbracht werden, dessen Aufnahmefläche der Krümmungsgeometrie der Glasscheiben in der fertigen Verbundsicherheitsglasscheibe entspricht, wobei in der Entladestation für die Glasscheiben eine Abnahmeeinrichtung vorgesehen ist, die zumindest im Randbereich eine Optimierungskontur aufweist, die der vorgegebenen Krümmungsgeometrie der Außenglasscheibe bzw. der Innenglasscheibe der fertigen Verbundsicherheitsglasscheibe entspricht, und
wobei die Entladestation mit Vorrichtungen ausgerüstet ist, mit denen die Glasscheiben an die Optimierungskontur der Abnahmeeinrichtung anlegbar sind.

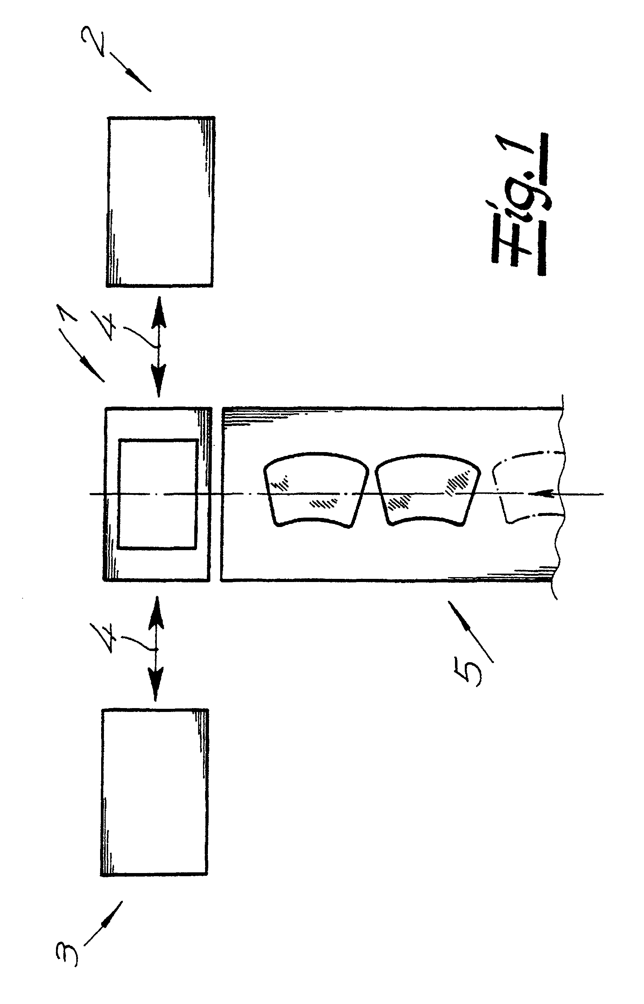

Im folgenden wird die Erfindung anhand einer lediglich ein Ausführungsbeispiel darstellenden Zeichnung ausführlicher erläutert. Es zeigen in schematischer Darstellung
- Fig. 1: die Draufsicht auf eine für das erfindungsgemäße Verfahren eingerichteten Preßbiegeanlage ausschnittsweise,
- Fig. 2: eine Ansicht des Gegenstandes der Fig. 1 aus Richtung der Transferstraße und
- Fig. 3: in gegenüber den Fig. 1 und 2 wesentlich vergrößertem Maßstab den Ausschnitt A aus dem Gegenstand der Fig. 2 mit Einrichtung für die Optimierungsbiegung.

Die in den Figuren dargestellte Preßbiegeanlage dient zum Biegen der Außenglasscheibe und der Innenglasscheibe von mit vorgegebener Krümmungsgeometrie gebogenen Verbundsicherheitsglasscheiben, in denen jeweils eine Außenglasscheibe und eine Innenglasscheibe unter Zwischenschaltung einer Verbundfolie gepaart sind. Zu der Preßbiegeanlage gehören u. a. eine Biegestation 1, eine Außenglasscheiben-Entladestation 2, eine Innenglasscheiben-Entladestation 3 und Transportshuttles 4, die zwischen der Biegestation 1 und den Entladestationen 2, 3 arbeiten. Die auf Biegetemperatur erwärmten, zu biegenden Glasscheiben werden mit Hilfe einer Transferstraße 5 einzeln in die Biegestation 1 eingeführt und in dieser unter Berücksichtigung der Krümmungsgeometrie der Verbundsicherheitsglasscheibe gebogen. Die gebogene Außenglasscheibe wird mit ihrem Transportshuttle 4 zur Außenglasscheiben-Entladestation 2 verbracht. Dieser Transportshuttle 4 besitzt eine Aufnahmefläche 6 die der Krümmungsgeometrie der Außenglasscheibe in der fertigen Verbundsicherheitsglasscheibe entspricht. Die gebogene Innenglasscheibe wird mit ihrem Transportshuttle 4 zur Innenglasscheiben-Entladestation 3 verbracht. Dieser Transportshuttle 4 besitzt eine Aufnahmefläche 6, die der Krümmungsgeometrie der Innenglasscheibe in der fertigen Verbundsicherheitsglasscheibe entspricht. - Die im Grundriß T-förmige Gestaltung der Preßbiegeanlage ist nur ein Ausführungsbeispiel. Man kann den Grundriß auch L-förmig gestalten, und zwar mit nur einer Entladestation und zwei Abnahmeeinrichtungen, die abwechselnd für die Außenglasscheibe und die Innenglasscheibe die bereits oben und weiter unter beschriebenen Funktionen erfüllen.

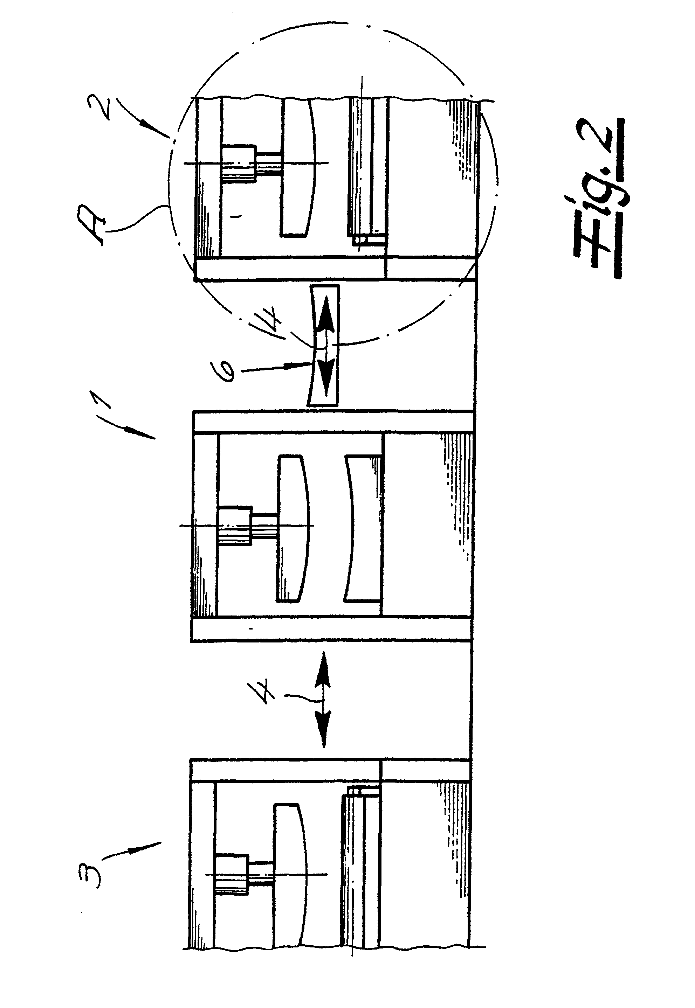

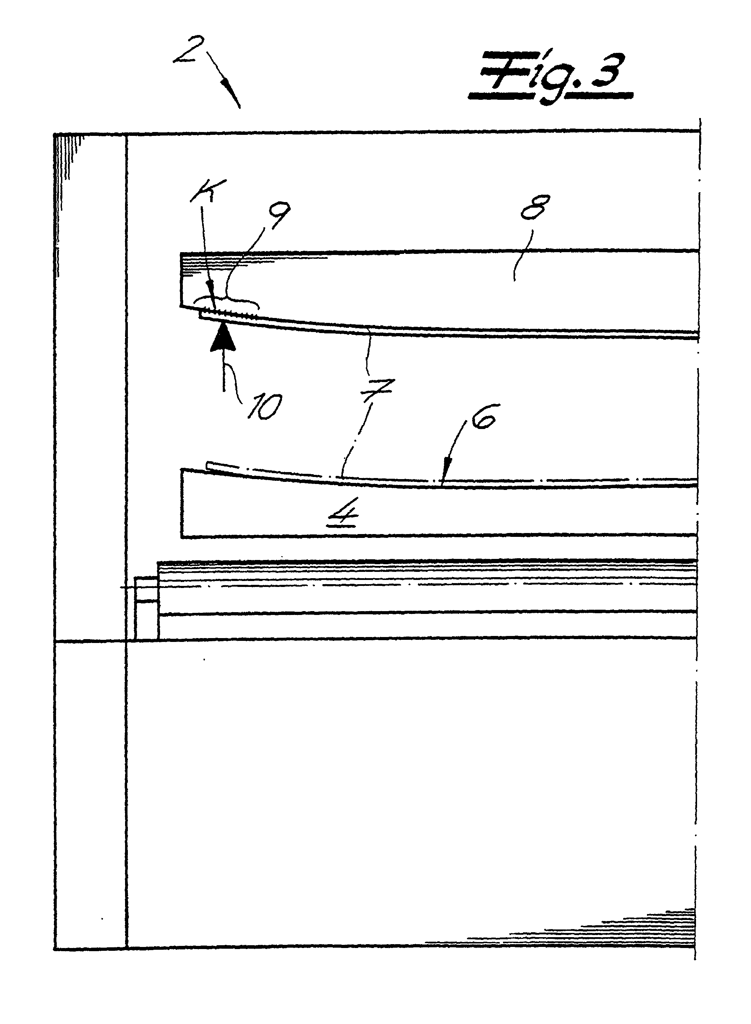

Erfindungsgemäß werden die Außenglasscheibe und die Innenglasscheibe mit einer Temperatur, die im unteren Biegetemperaturbereich liegt, in der ihnen zugeordneten Entladestation 2, 3 einer Optimierungsbiegung unterworfen. Zur Erläuterung der Optimierungsbiegung wird auf die Fig. 2 und 3 verwiesen. Man erkennt, daß die Außenglasscheibe 7 von dem Transportshuttle 4 mit Hilfe einer Abnahmeeinrichtung 8 abgehoben wird, die zumindest im Randbereich eine Optimierungskontur 9 aufweist. Die Optimierungskontur 9 entspricht der vorgegebenen Krümmungsgeometrie K der Außenglasscheibe 7 in der fertigen Verbundsicherheitsglasscheibe. Zur Durchführung der Optimierungsbiegung wird zumindest der Randbereich dieser Außenglasscheibe 7 in Richtung des Pfeiles 10 gegen die Optimierungskontur 9 gedrückt. Das kann durch aerostatische und/oder aerodynamische Kräfte erfolgen, die die Abnahmeeinrichtung 8 erzeugt. Es kann auch mit mechanischen Einrichtungen gearbeitet werden. - Entsprechend wird in bezug auf die gebogene Innenglasscheibe verfahren, die ebenfalls eine Optimierungsbiegung erfährt, was nicht dargestellt wurde.

Im Zuge der Optimierungsbiegung kühlt die Außenglasscheibe bzw. die Innenglasscheibe auf eine Temperatur unterhalb des Biegetemperaturbereichs ab. Danach werden die Scheiben von der Abnahmeeinrichtung 8 einem Förderer aufgegeben, der zur Weiterverarbeitung führt. Im Detail wird dabei so verfahren, wie es den Patentansprüchen 1 bis 5 entspricht.

## Patentansprüche

1. Verfahren zum Biegen der Außenglasscheibe und der Innenglasscheibe von mit vorgegebener Krümmungsgeometrie gebogenen Verbundsicherheitsglasscheiben, in denen jeweils eine Außenglasscheibe und eine Innenglasscheibe unter Zwischenschaltung einer Verbundfolie gepaart sind, bei welchem Verfahren das Biegen in einer Preßbiegeanlage erfolgt,
welche Preßbiegeanlage eine Biegestation, zumindest eine Entladestation sowie zwischen Biegestation und Entladestation einen Transportshuttle aufweist,
wobei die auf Biegetemperatur erwärmten, zu biegenden Glasscheiben mit Hilfe einer Transferstraße einzeln in die Biegestation eingeführt und in dieser unter Berücksichtigung der vorgegebenen Krümmungsgeometrie der Verbundsicherheitsglasscheiben gebogen werden, mit den Merkmalen:
1.1) die Außenglasscheibe und die Innenglasscheibe werden mit einer Temperatur, die im unteren Biegetemperaturbereich liegt, in der ihnen zugeordneten Entladestation einer Optimierungsbiegung unterworfen,
1.2) zur Durchführung der Optimierungsbiegung wird die entsprechende Glasscheibe von dem Transportshuttle mit Hilfe einer Abnahmeeinrichtung abgehoben, welche Abnahmeeinrichtung zumindest im Randbereich eine Optimierungskontur aufweist, welche der vorgegebenen Krümmungsgeometrie der Außenglasscheibe bzw. der Innenglasscheibe in der fertigen Verbundsicherheitsglasscheibe entspricht,
1.3) durch Anlegen der entsprechenden Glasscheibe an die Optimierungskontur der Abnahmeeinrichtung wird die Optimierungsbiegung durchgeführt,
wobei sich im Zuge der Optimierungsbiegung die Glasscheibe auf eine Temperatur unterhalb des Biegetemperaturbereichs abkühlt.

2. Verfahren nach Anspruch 1 in der Ausführungsform für die Herstellung von Verbundsicherheitsglasscheiben für Kraftfahrzeuge, wobei die Außenglasscheibe und die Innenglasscheibe mit einer Biegetemperatur im Bereich von 550 bis 580° C der Optimierungsbiegung unterworfen werden und bei einer Temperatur unter 530° C an eine Fördereinrichtung abgegeben werden.

3. Verfahren nach einem der Ansprüche 1 oder 2, wobei im Rahmen der Merkmale 1.2) und 1.3) das Anlegen der Glasscheiben an die Abnahmeeinrichtung mit Hilfe von aerostatischen und/oder aerodynamischen Luftkräften vorgenommen wird, die von der Abnahmeeinrichtung erzeugt werden.

4. Verfahren nach einem der Ansprüche 1 oder 2, wobei im Rahmen der Merkmale 1.2) und 1.3) das Anlegen der Glasscheiben an die Abnahmeeinrichtung mit Hilfe von mechanischen Einrichtungen vorgenommen wird.

5. Verfahren nach einem der Ansprüche 1 bis 4, wobei der Optimierungsbiegung für die einzelnen Verbundsicherheitsglasscheiben eine Außenglasscheibe und eine Innenglasscheibe zugeführt werden, die in der Biegestation mit der gleichen Vakuumflächenform gebogen worden sind, deren Formflächen zumindest bereichsweise einer Krümmungsfläche der Verbundfolien der fertigen Verbundsicherheitsglasscheibe entspricht, z. B. im Zentrumsbereich.

6. Preßbiegeanlage zum Biegen der Außenglasscheibe und der Innenglasscheibe von mit vorgegebener Krümmungsgeometrie gebogenen Verbundsicherheitsglasscheiben, in denen jeweils eine Außenglasscheibe und eine Innenglasscheibe unter Zwischenschaltung einer Verbundfolie gepaart sind,
welche Preßbiegeanlage eine Biegestation, zumindest eine Entladestation sowie zwischen Biegestation und Entladestation jeweils einen Transportshuttle aufweist,
wobei die gebogenen Glasscheiben mit dem Transportshuttle zur Entladestation verbracht werden, dessen Aufnahmefläche der Krümmungsgeometrie der Glasscheiben in der fertigen Verbundsicherheitsglasscheibe entsprechen, wobei in den Entladestation für die Glasscheiben eine Abnahmeeinrichtung vorgesehen ist, die zumindest im Randbereich eine Optimierungskontur aufweist, die der vorgegebenen Krümmungsgeometrie der Außenglasscheibe bzw. der Innenglasscheibe der fertigen Verbundsicherheitsglasscheibe entspricht, und wobei die Entladestation mit Vorrichtungen ausgerüstet ist, mit denen die Glasscheiben an die Optimierungskontur der Abnahmeeinrichtung anlegbar sind.

## Revendications

1. Procédé pour cintrer la vitre extérieure et la vitre intérieure de vitres de sécurité composites arquées suivant une géométrie de courbure prédéfinie, dans lesquelles une vitre extérieure et une vitre intérieure sont associées avec interposition d'une feuille composite, le cintrage s'effectuant au cours de ce procédé dans une installation de cintrage par pression,
ladite installation de cintrage par pression comportant un poste de cintrage, au moins un poste de déchargement ainsi qu'une navette de transport entre le poste de cintrage et le poste de déchargement,
les vitres à cintrer, chauffées à la température de cintrage, étant introduites individuellement, à l'aide d'une voie de transfert, dans le poste de cintrage et étant cintrées dans celui-ci, en tenant compte de la géométrie de courbure prédéfinie des vitres de sécurité composites, présentant les caractéristiques suivantes :
1.1) la vitre extérieure et la vitre intérieure sont soumises, à une température qui se situe dans la plage inférieure des températures de cintrage, à un cintrage d'optimisation dans le poste de déchargement qui leur est affecté,
1.2) pour la mise en oeuvre du cintrage d'optimisation, la vitre correspondante est soulevée de la navette de transport à l'aide d'un dispositif de prélèvement, lequel dispositif de prélèvement présente au moins dans la zone de bordure un contour d'optimisation qui correspond à la géométrie de courbure prédéfinie de la vitre extérieure ou de la vitre intérieure dans la vitre de sécurité composite définie,
1.3) le cintrage d'optimisation est mis en oeuvre par application de la vitre correspondante contre le contour d'optimisation du dispositif de prélèvement,
la vitre étant refroidie à une température inférieure à la plage des températures de cintrage, au cours du cintrage d'optimisation.

2. Procédé selon la revendication 1 dans la forme de réalisation pour la fabrication de vitres de sécurité composites pour véhicules automobiles, la vitre extérieure et la vitre intérieure étant soumises au cintrage d'optimisation à une température de cintrage comprise entre 550 et 580 °C, et étant délivrées à un dispositif de transport à une température inférieure à 530 °C.

3. Procédé selon l'une des revendications 1 ou 2, l'application des vitres contre le dispositif de prélèvement s'effectuant, dans le cadre des caractéristiques 1.2) et 1.3), à l'aide de forces aérostatiques et/ou aérodynamiques de l'air, qui sont produites par le dispositif de prélèvement.

4. Procédé selon l'une des revendications 1 ou 2, l'application des vitres contre le dispositif de prélèvement s'effectuant, dans le cadre des caractéristiques 1.2) et 1.3), à l'aide de dispositifs mécaniques.

5. Procédé selon l'une des revendications 1 à 4, dans lequel on envoie au cintrage d'optimisation pour les différentes vitres de sécurité composites, une vitre extérieure et une vitre intérieure qui ont été cintrées dans le poste de cintrage avec le même moule de surface sous vide dont les surfaces de moulage correspondent, au moins par endroits, à une surface de courbure des feuilles composites de la vitre de sécurité composite finie, par exemple dans la zone centrale.

6. Installation de cintrage sous pression pour cintrer la vitre extérieure et la vitre intérieure de vitres de sécurité composites cintrées suivant une géométrie de courbure prédéfinie, dans lesquelles une vitre extérieure et une vitre intérieure sont associées avec interposition d'une feuille composite,
ladite installation de cintrage par pression comportant un poste de cintrage, au moins un poste de déchargement ainsi qu'une navette de transport entre le poste de cintrage et le poste de déchargement,
les vitres cintrées étant amenées, au moyen de la navette de transport, au poste de déchargement dont la surface de réception correspond à la géométrie de courbure des vitres dans la vitre de sécurité composite finie, dans le poste de déchargement étant prévu, pour les vitres, un dispositif de prélèvement qui présente, au moins dans la zone de bordure, un contour d'optimisation qui correspond à la géométrie de courbure prédéfinie de la vitre extérieure ou de la vitre intérieure de la vitre de sécurité composite finie, et le poste de déchargement étant équipé de dispositifs au moyen desquels les vitres peuvent être appliquées contre le contour d'optimisation du dispositif de prélèvement.

## Claims

1. Process for bending the outer glass pane and the inner glass pane of laminated safety glass panes bent with predefined curvature geometry, in which in each case an outer glass pane and an inner glass pane are combined by interposing a laminating film, in which process bending takes place in a press-bending system, which press-bending system incorporates a bending station, at least one discharge station, as well as between bending station and discharge station, a conveyor shuttle, where the glass panes to be bent, heated to bending temperature, are introduced singly into the bending station with the aid of a transfer line and are bent in it, taking account of the predefined curvature geometry of the laminated safety glass panes, with the following features:
1.1 the outer glass pane and the inner glass pane are subjected to optimizing bending at a temperature, which is in the lower bending temperature range, in the discharge station assigned to them,
1.2 to carry out optimizing bending, the corresponding glass pane is lifted off the conveyor shuttle with the aid of a take-off device, which take-off device at least in the edge area possesses an optimizing contour which corresponds to the predefined curvature geometry of the outer glass pane or the inner glass pane in the finished laminated safety glass pane,
1.3 the optimizing bending is carried out by placing the corresponding glass pane on the optimizing contour of the take-off device, where, during the course of the optimizing bending, the glass pane is cooled down to a temperature below the bending temperature.

2. Process in accordance with Claim 1 in the embodiment for production of laminated safety glass panes for motor vehicles, where the outer glass pane and the inner glass pane are subjected to optimizing bending at a bending temperature in the range of 550 to 580 °C and are deposited onto a conveyor device at a temperature below 530 °C.

3. Process in accordance with Claims 1 or 2, where within the scope of Features 1.2) and 1.3), the glass panes are placed on the take-off device with the aid of aerostatic and/or aerodynamic forces which are generated by the take-off device.

4. Process in accordance with one of Claims 1 or 2, where within the scope of Features 1.2) and 1.3), the glass panes are placed on the take-off device with the aid of mechanical devices.

5. Process in accordance with one of Claims 1 to 4, where an outer glass pane and an inner glass pane for the individual laminated safety glass panes are brought up for optimizing bending after being bent in the bending station with the same vacuum plane mould whose mould surfaces correspond at least partly to the curvature surface of the laminating films in the finished laminated safety glass pane, e.g. in the central area.

6. Press-bending system for bending the outer glass pane and the inner glass pane of laminated safety glass panes bent with predefined curvature geometry, in which in each case an outer glass pane and an inner glass pane are combined by interposing a laminating film, which press-bending system incorporates a bending station, at least one discharge station, as well as between bending station and discharge station a conveyor shuttle, where the bent glass panes are transferred with the conveyor shuttle to the discharge station, whose locating surface corresponds to the curvature geometry of the glass panes in the finished laminated safety glass pane, where for the glass panes a take-off device is provided in the discharge station, which take-off device at least in the edge area possesses an optimizing contour which corresponds to the predefined curvature geometry of the outer glass pane or the inner glass pane of the finished laminated safety glass pane and where the discharge station is equipped with devices with which the glass panes can be placed on the optimizing contour of the take-off device.
